(19) Europäisches Patentamt / European Patent Office / Office européen des brevets

(11) **EP 4 397 929 A1**

(12) **EUROPEAN PATENT APPLICATION**
published in accordance with Art. 153(4) EPC

(43) Date of publication:
**10.07.2024 Bulletin 2024/28**

(21) Application number: **23869289.1**

(22) Date of filing: **13.09.2023**

(51) International Patent Classification (IPC):
*F26B 3/08* (2006.01)     *F26B 3/10* (2006.01)
*F26B 17/10* (2006.01)    *F26B 17/14* (2006.01)

(52) Cooperative Patent Classification (CPC):
**F26B 3/08; F26B 3/10; F26B 17/10; F26B 17/14**

(86) International application number:
**PCT/KR2023/013707**

(87) International publication number:
**WO 2024/080582 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.10.2022 KR 20220131796
08.09.2023 KR 20230119543**

(71) Applicant: **LG Chem, Ltd.
Seoul 07336 (KR)**

(72) Inventors:
• **JEONG, Sung Woo
Daejeon 34122 (KR)**
• **JEONG, In Yong
Daejeon 34122 (KR)**

(74) Representative: **Plasseraud IP
66, rue de la Chaussée d'Antin
75440 Paris Cedex 09 (FR)**

(54) **METHOD OF DRYING WET POWDER USING FLUIDIZED BED DRYER**

(57)     METHOD OF DRYING WET POWDER USING FLUIDIZED BED DRYER

A method of drying wet powder using a fluidized bed dryer includes: (S1) dividing a lower gas chamber into two or more compartments in the fluidized bed dryer including a gas distribution plate having a plurality of holes and an upper drying chamber and the lower gas chamber divided by the gas distribution plate; (S2) raising an internal temperature of the upper drying chamber and then supplying wet powder through an inlet provided on one side of the upper drying chamber; and (S3) supplying a fluidizing gas at different flow velocities to the two or more compartments, respectively, of the lower gas chamber using an external blower and introducing the fluidizing gas at different flow velocities into a corresponding region of the upper drying chamber through the gas distribution plate to perform drying of the wet powder.

【FIG. 2】

EP 4 397 929 A1

**Description**

[Technical Field]

Cross-reference to related application

The present application claims priority to Korean Patent Application Nos. 10-2022-0131796, filed on October 13, 2022, and 10-2023-0119543, filed on September 8, 2023, the entire contents of which are incorporated herein for all purposes by this reference.

Technical field

The present invention relates to a method of drying wet powder using a fluidized bed dryer, and more particularly, to a method of drying wet powder, capable of implementing excellent drying performance for wet powder of various particle sizes, while minimizing a scattering behavior of powder flowing inside a dryer.

[Background Art]

A fluidized bed dryer (FBD) is a device that dries wet powder by moving the wet powder through a fluidized bed formed by a fluidizing gas, which enables large-capacity drying of heat-sensitive or unstable materials and has been used in various fields, such as fuels, such as coal, polymers, pharmaceuticals, cosmetics, and food.

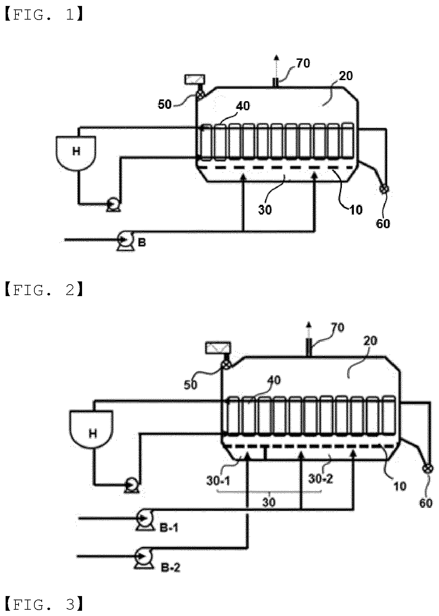

FIG. 1 schematically illustrates a commonly used horizontal fluidized bed dryer, which includes a gas distribution plate 10 having a plurality of holes, an upper drying chamber 20 and a lower gas chamber 30 divided by the gas distribution plate, a heat transfer plate 40 provided inside the upper drying chamber, a wet powder inlet 50 provided on one side of the upper drying chamber and a dry powder outlet 60 provided on the other side of the upper drying chamber, and a gas/flying powder discharge pipe 70 provided at an upper end of the upper drying chamber.

When wet powder is supplied to the upper drying chamber 20 through the wet powder inlet 50 and the fluidizing gas flowing into the lower gas chamber 30 is evenly supplied upwardly through the gas distribution plate 10, moisture included in the powder is evaporated into water vapor by thermal energy as the wet powder flows, the water vapor is removed through the gas/flying powder discharge pipe 70 by the fluidizing gas, and the powder dried as the moisture is removed is obtained through the dry powder outlet 60.

As powder moves from the wet powder inlet 50 to the dry powder outlet 60 inside the upper drying chamber 20, the water content of the powder gradually decreases, and powder staying near the inlet 50 has a high water content and a large amount of water vapor is generated due to a relatively fast dry rate, increasing relative humidity. The relative humidity of 100% means that the amount of water vapor transported by the fluidizing gas has reached a saturated state, and as the saturation state approaches, an evaporation rate of moisture on the powder surface into water vapor decreases, which may reduce drying performance.

To solve this problem, if a flow rate of the fluidizing gas is increased, the amount of water vapor that may be transported may increase, which increases a drying speed and lowers the relative humidity. However, as the fluidizing gas increases over the entire area of the drying chamber, the scattering behavior of powder may be strengthened, which may adversely affect an operation of external collection devices (e.g., cyclones, wet scrubbers) connected to the gas/flying powder discharge pipe 70. Accordingly, when there is concern about the scattering behavior of powder remaining in the upper drying chamber 20, the gas flow rate is limited, and as a result, drying performance is limited.

Meanwhile, wet powder of various particle sizes may be supplied to the fluidized bed dryer. Large wet powder having large particle sizes is disadvantageous in forming a fluidized bed compared to small powder and may be accumulated in a lower portion. If there is a member, such as a partition, inside a drying chamber where the fluidized bed is formed, large wet powder having large particle sizes accumulates in the lower portion of the drying chamber and may be difficult to move toward the outlet. To solve this problem, if a flow velocity of the fluidizing gas is increased, energy consumption increases, and powder having relatively small particle sizes may be discharged to the outside of the dryer due to scattering behavior, which may reduce the drying yield.

[Disclosure]

[Technical Problem]

The present invention is intended to solve the problems mentioned in the background art, and provides a method of drying wet powder, capable of implementing excellent drying performance for wet powder of various particle sizes, while minimizing a scattering behavior of powder flowing inside a dryer.

[Technical Solution]

In one general aspect, a method of drying wet powder using a fluidized bed dryer includes: (S1) dividing a lower gas chamber into two or more compartments in the fluidized bed dryer including a gas distribution plate having a plurality of holes and an upper drying chamber and the lower gas chamber divided by the gas distribution plate; (S2) raising an internal temperature of the upper drying chamber and then supplying wet powder through an inlet provided on one side of the upper drying chamber; and (S3) supplying a fluidizing gas at different flow velocities to the two or more compartments, respectively, of the lower gas chamber using an external blower and introducing the fluidizing gas at different flow velocities into a corresponding region of the upper drying chamber through the gas distribution plate to perform drying of the wet powder.

The lower gas chamber may include a first compartment corresponding to a region adjacent to the inlet of the upper drying chamber and a remaining second compartment, an area of the first compartment may account for 20 to 50% of a total area of the lower gas chamber, and the flow velocity of the fluidizing gas supplied to the first compartment may be 1.2 to 1.6 times the flow velocity of the fluidizing gas supplied to the second compartment.

In another general aspect, a fluidized bed dryer for performing the drying method of wet powder includes: a gas distribution plate having a plurality of holes, an upper drying chamber and a lower gas chamber divided by the gas distribution plate, a heat transfer plate provided inside the upper drying chamber, a wet powder inlet provided on one side of the upper drying chamber and dry powder outlet provided on the other side of the upper drying chamber, and a gas/flying powder discharge pipe provided on top of the upper drying chamber, wherein the lower gas chamber includes two or more divided compartments, and two or more external blowers are respectively connected to the two or more compartments to supply fluidizing gas at different flow velocities.

[Advantageous Effects]

According to the present invention, when drying wet powder using a fluidized bed dryer, the lower gas chamber is divided into two or more compartments and two or more external blowers are respectively connected to the two or more compartments to supply fluidizing gas at different flow velocities, thereby adjusting a distribution ratio of the introduced fluidizing gas according to regions of the upper drying chamber respectively corresponding to the compartments of the lower gas chamber.

In particular, considering that the water content and drying speed decrease as the powder flowing inside the upper drying chamber moves from the inlet to the outlet, the flow velocity of the fluidizing gas is relatively increased in the first compartment corresponding to a region in the lower gas chamber adjacent to the inlet of the upper drying chamber, thereby implementing excellent drying performance for wet powder of various particle sizes, while minimizing the scattering behavior of powder flowing inside the upper drying chamber.

[Description of Drawings]

FIG. 1 schematically illustrates a commonly used fluidized bed dryer having a horizontal structure.
FIGS. 2 to 5 illustrate a fluidized bed dryer capable of adjusting a distribution ratio of a fluidizing gas according to an embodiment of the present invention.
FIG. 6 illustrates a comparison of the fluidization states according to span values of dry powder.

[Best Mode]

Terms and words used in the present specification and claims are not to be construed as a general or dictionary meanings but are to be construed as meanings and concepts meeting the technical ideas of the present invention based on a principle that the inventors may appropriately define the concepts of terms in order to describe their own inventions in the best mode.

As used herein, the meaning of 'comprising' or 'containing' specifies a specific characteristic, region, integer, step, operation, element, or ingredient and does not exclude addition of another specific characteristic, region, integer, step, operation, element, or ingredient.

An embodiment of the present invention relates to a method of drying wet powder using a fluidized bed dryer, which is capable of adjusting a distribution ratio of a fluidizing gas, as illustrated in FIGS. 2 to 5.

Hereinafter, the method of drying wet powder of the present invention will be described by stages in detail with reference to the accompanying drawings.

Referring to FIGS. 2 to 5, the present invention uses a fluidized bed dryer including a gas distribution plate 10 having a plurality of holes and an upper drying chamber 20 and a lower gas chamber 30 divided by the gas distribution plate, and the lower gas chamber 30 is divided into two or more compartments (S1).

The gas distribution plate 10 is formed of a material that may withstand high temperatures (for example, a metal material), has a plate-like shape with a plurality of holes, and may be disposed to separate an internal space of the fluidized bed dryer into upper and lower portions.

The upper drying chamber 20 is an internal space in which wet powder stays and flows by a fluidizing gas, and may include a heat transfer plate 40 therein. The heat transfer plate is connected to an external high-temperature water circulator to increase an internal temperature of the upper drying chamber 20, thereby supplying thermal energy for removing moisture from the wet powder. In addition, the upper drying chamber may include an inlet 50 provided on one side, an outlet 60 provided on the other side, and a gas and flying powder discharge pipe 70 provided at the top.

The lower gas chamber 30 accommodates the fluidizing gas supplied from an external blower B and causes the fluidizing gas to move upwardly through a distribution hole of the gas distribution plate 10 and flow into the upper drying chamber 20.

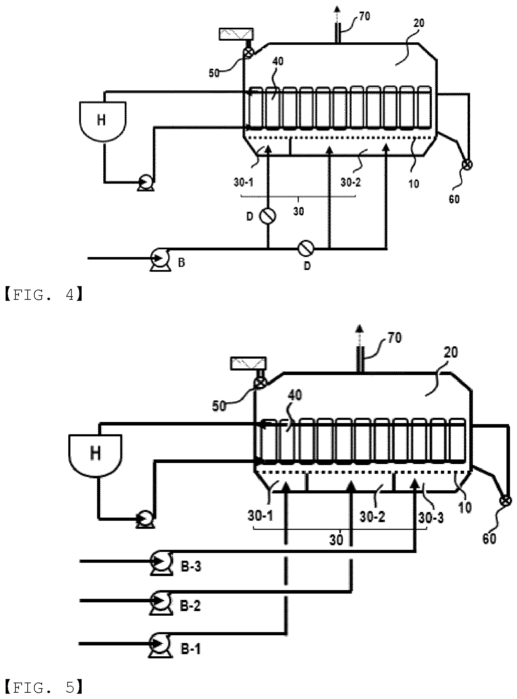

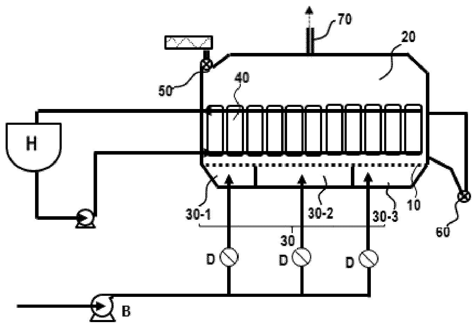

In the present invention, in order to adjust the rate at which fluidizing gas flows from the lower gas chamber 30 into the upper drying chamber 20, the lower gas chamber 30 is divided into two or more compartments. For example, the lower gas chamber 30 may include a first compartment 30-1 corresponding to a region adjacent to the wet powder inlet 50 provided on one side of the upper drying chamber 20 and a remaining second compartment 30-2 (refer to FIGS. 2 and 3), and the second compartment may be further divided to include a third compartment 30-3 (refer to FIGS. 4 and 5).

Referring to FIGS. 2 and 4, the lower gas chamber 30, which is divided into two or more compartments as described above, may each receive fluidizing gas from a separate external blower. That is, two or more external blowers B-1, B-2, and B-3 may be connected to two or more compartments 30-1, 30-2, and 30-3 of the lower gas chamber, respectively, the fluidizing gas may be supplied to each of the compartments at different flow velocities.

As another method, referring to FIGS. 3 and 5, one external blower may be connected to the lower gas chamber 30 and two or more dampers may be provided between the external blower and the lower gas chamber. The damper is a member that stops or adjusts flow of gas flowing into the gas chamber, and may distribute and adjust a flow rate of the fluidizing gas supplied from the external blower using two or more dampers and supply the fluidizing gas to two or more compartments, respectively, of the lower gas chamber at different flow velocities.

In this manner, when the lower gas chamber 30 is divided into two or more compartments and the fluidizing gas is supplied to each compartment at a different flow rate, a distribution ratio of the fluidizing gas may be controlled according to regions of the upper drying chamber 20 corresponding to the compartments under the conditions in which the total flow rate of the fluidizing gas flowing into the dryer is equal. Through this, it is possible to maximize drying performance over the entire path along which powder of various particle sizes moves by varying the flow rate of contacting gas according to the water content of powder in each region inside the upper drying chamber 20.

In an embodiment of the present invention, the first section 30-1 of the lower gas chamber 30 may occupy 20 to 50%, specifically 25 to 35%, of the total area of the lower gas chamber. If the area of the first compartment 30-1 is less than 20%, it may be difficult to properly control a gas distribution ratio intended in the present invention and, as time for which powder with high water content stays in the first compartment 30-1 is short, drying efficiency may be reduced during the stay of the powder. Meanwhile, if the area of the first compartment 30-1 exceeds 50%, more fluidizing gas than necessary may be supplied, making it difficult to optimize distribution of the gas flow rate.

In addition, when the second compartment 30-2 is further divided in the lower gas chamber 30 to include the third compartment 30-3, the first compartment 30-1, the second compartment 30-2, and the third compartment 30-3 are preferably divided at an area ratio of 25:45:30 to 35:35:30, considering drying characteristics according to the water content of the powder.

After dividing the lower gas chamber, the internal temperature of the upper drying chamber 20 is raised, and wet powder is supplied through the inlet 50 provided on one side of the upper drying chamber (S2).

The internal temperature of the upper drying chamber 20 may be increased by connecting an external hot-water circulator H to the heat transfer plate 40 disposed inside the drying chamber to circulate hot water and may be increased to, for example, 40 to 80 °C. Wet powder may be supplied when the temperature of the heat transfer plate 40 is increased by the hot water circulation and the thermal energy conducted therefrom is balanced.

The wet powder may be used without limitation as long as the powder is powder of various materials that require drying, and may be, for example, fuel, such as coal; polymers, such as acrylonitrile butadiene styrene (ABS), acrylobutadiene nitrile, polyvinyl chloride, polycarbonate, polymethyl methacrylate, etc.; other raw powder, such as pharmaceuticals, cosmetics, food, etc.

In an embodiment of the present invention, the wet powder may have a water content of 15 to 50% relative to the total weight, and powder of various particle sizes with a wide particle size distribution may be introduced.

After supplying the wet powder, a fluidizing gas is supplied at different flow velocities to two or more compartments, respectively, of the lower gas chamber 30 using two or more external blowers B-1 and B-2, and the fluidizing gas at different flow velocities is introduced into corresponding regions of the upper drying chamber 20 through the gas distribution plate 10, thereby performing drying (S3).

The term 'flow velocity' used in this specification refers to a distance by which the fluidizing gas travels per unit time (m/s), which may be calculated as a value obtained by dividing a flow rate ($m^3/s$), which is the amount of fluidizing gas flowing in unit time, by the area (m2) .

Specifically, in the region adjacent to the inlet 50 of the upper drying chamber 20, a large amount of water vapor may be generated due to the high water content of the initial powder, thereby increasing relative humidity. Therefore, in order to maintain the relative humidity of the region adjacent to the inlet 50 of the upper drying chamber 20 at 95% or less, specifically, 92% or less, and more specifically, 90% or less, the lower gas chamber 30 supplies fluidizing gas at a relatively high flow rate to a compartment corresponding to the region adjacent to the wet powder inlet 50 of the upper drying chamber 20.

The fluidizing gas at the increased flow rate flows to the corresponding area of the upper drying chamber 20 to sufficiently transport and remove a large amount of water vapor generated due to the high water content of powder staying near the inlet 50, thereby reducing the relative humidity of the region adjacent to the inlet 50 and suppressing consequent deterioration of drying performance.

In addition, the fluidizing gas at the increased flow velocity facilitates the movement of large powder with large particle sizes near the inlet 50 inside the upper drying chamber 20, thereby preventing the large powder from accumulating in the lower portion, and minimizing scattering behavior of powder flowing inside the upper drying chamber 20 to implement excellent drying performance for wet powder of various particle sizes.

In an embodiment of the present invention, as shown in FIGS. 2 and 3, when the lower gas chamber 30 includes the first compartment 30-1 corresponding to a region adjacent to the wet powder inlet 50 and the remaining second compartment 30-2, a flow velocity of the fluidizing gas supplied to the first compartment 30-1 may be 1.2 to 1.6 times, specifically 1.3 to 1.5 times, a flow velocity of the fluidizing gas supplied to the second compartment. If the rate of the flow velocity to the first compartment 30-1 is less than 1.2 times, the effect of reducing the relative humidity in the region adjacent to the wet powder inlet 50 in the upper drying chamber 20 may be insufficient, resulting in reduced drying performance. Meanwhile, if the rate of the flow velocity to the first compartment 30-1 exceeds 1.6 times, the scattering behavior of small powder may be strengthened by the excessive flow velocity of the fluidizing gas.

For example, the flow velocity of the fluidizing gas supplied to the first compartment 30-1 may be in the range of 0.3 to 0.7 m/s, specifically 0.4 to 0.6 m/s. If the flow velocity of the fluidizing gas supplied to the first compartment is less than 0.3 m/s, the proportion of non-fluidized powder may increase to cause agglomeration of powder in a state of high water content or fouling may occur in a lower portion of the first compartment, which may deteriorate dryer performance and increase maintenance costs. Meanwhile, if the flow velocity of the fluidizing gas supplied to the first compartment exceeds 0.7 m/s, the scattering behavior of small powder may be strengthened to adhere to the walls of the drying chamber due to upward movement in a state of high water content or be separated from the drying chamber, which may resultantly increase dryer maintenance costs or cause powder loss.

Therefore, by setting the flow velocity of the first compartment to satisfy a predetermined range and setting the flow velocity of the fluidizing gas supplied to the second compartment 30-2 to satisfy a flow velocity ratio described above, excellent drying performance may be implemented for wet powder of various particle sizes, while minimizing the occurrence of fouling inside the dryer and scattering behavior of flowing powder, and the maintenance costs of the dryer may be reduced.

Meanwhile, as shown in FIGS. 4 and 5, when the lower gas chamber 30 includes the first compartment 30-1 corresponding to the region adjacent to the wet powder inlet 50, the remaining second compartment 30-2, and the third compartment 30-3, the flow velocity of the fluidizing gas supplied to each compartment may be adjusted to a ratio of, for example, 1.4:1.2:1 to 1.5:1.1:1, and when the flow velocity ratio is satisfied, optimization of the fluidizing gas distribution ratio considering the drying characteristics of powder may be implemented.

In an embodiment of the invention, the fluidizing gas may be heated air, i.e., hot air, generally used in fluidized bed dryers.

In the upper drying chamber 20, the wet powder is supplied with thermal energy and moisture thereof is removed. 80 to 90% of the thermal energy is due to an increase in the internal temperature by the heat transfer plate 40, and the remainder is due to hot air of the fluidizing gas flowing from the lower gas chamber 30.

At this time, the powder flowing in the region adjacent to the inlet 50 of the upper drying chamber 20 has a high water content, so the region is advantageous to receive a relatively large amount of thermal energy compared to other regions. To this end, the temperature of the fluidizing gas supplied to the first compartment 30-1 of the lower gas chamber 30 in a previous stage is adjusted to be 10 to 50 °C, for example, 30 °C, higher than the temperature of the fluidizing gas supplied to the second compartment 30-2.

Meanwhile, after the region adjacent to the inlet 50 in the upper drying chamber 20, the water content of the powder decreases, and thus, evaporation of moisture contained in the powder decreases, thereby reducing the energy required for drying. Therefore, excessive consumption of energy may be prevented by adjusting the temperature of the fluidizing gas supplied to the second compartment 30-2 of the lower gas chamber to be the same as the internal temperature of the upper drying chamber.

If the temperature of the fluidizing gas flowing into the upper drying chamber 20 is lower than the internal temperature of the drying chamber, a portion of the thermal energy required for drying powder may be used to increase the temperature of the fluidizing gas, thereby reducing drying efficiency. That is, since the fluidizing gas passing through the upper drying chamber 20 is discharged in thermal equilibrium with the temperature conducted from the heat transfer plate 40 inside the drying chamber, it is not desirable that the temperature of the fluidizing gas is lower than the internal temperature of the drying chamber 20.

In this manner, the moisture of the powder supplied with thermal energy by the heat transfer plate 40 and the fluidizing gas adjusted to different flow velocities and temperatures for each region inside the upper drying chamber 20 is evaporated into water vapor, and since the water vapor interferes with the drying of the powder, the water vapor is removed through the gas/flying powder discharge pipe 70 by the fluidizing gas.

The gas/flying powder discharge pipe 70 may be connected to an external collection device (e.g., cyclone or wet scrubber) to collect small powder separately from a gas component, and the collected small powder is supplied back to the fluidized bed dryer or to a rear end.

Finally, the moisture is removed and dried powder is obtained through the outlet 60.

As described above, in the present invention, by relatively increasing the flow velocity of the fluidizing gas in the first compartment corresponding to the region of the lower gas chamber 30 adjacent to the inlet 50 of the upper drying chamber in consideration of the fact that the water content and drying speed decrease as the powder flowing inside the upper drying chamber 20 moves from the inlet 50 to the outlet 60, excellent drying performance may be implemented for wet powder having various particle sizes, while minimizing the scattering behavior of powder flowing inside the upper drying chamber 20.

Accordingly, the dry powder discharged from the upper drying chamber 20 may have a water content of 1% or less based on the total weight.

In addition, the dry powder discharged from the upper drying chamber 20 may have a particle size distribution with a span range of 0.5 to 4, specifically, 1.0 to 3, and more specifically, 1.5 to 2, as defined by Equation 1 below.

$$[\text{Equation 1}]$$

$$\text{Span} = (D_{90} - D_{10})/D_{50}$$

wherein $D_{10}$, $D_{50}$, and $D_{90}$ are sizes corresponding to 10%, 50%, and 90% of a cumulative volume in a particle size distribution of dry powder, respectively.

The particle size distribution may be determined using measurement results of a particle size analyzer, and as the span value defined by Equation 1 increases, the particle size distribution is wider.

For example, the dry powder discharged from the upper drying chamber 20 may have $D_{10}$ in the range of 100 to 250 $\mu$m, $D_{50}$ in the range of 250 to 550 $\mu$m, and $D_{90}$ in the range of 1000 to 2000 $\mu$m.

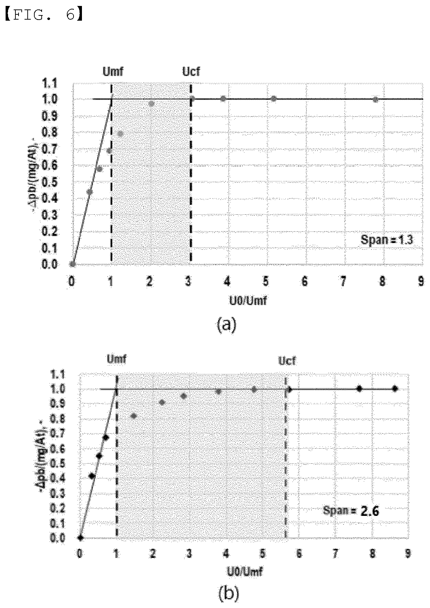

Meanwhile, FIG. 6 illustrates a comparison of fluidization states according to span values of the dry powder. If the value of $-\Delta$pb/ (mg/At) is 1, it means that the powder has reached a fully fluidized state, and a flow velocity of gas forming a fluidized bed in the drying chamber may be determined as a gas flow velocity of a complete fluidization speed or higher.

Referring to FIG. 6, when the span value of the powder is small (a), a gap between the minimum fluidization speed ($U_{mf}$) and the complete fluidization speed ($U_{cf}$), that is, a partial fluidization region, is narrow, whereas when the span value is large (b), the partial fluidization region is wide, so small powder is likely to scatter when operating at the full fluidization speed ($U_{cf}$).

Therefore, it is preferable to perform the drying process under gas flow velocity conditions for forming the partial fluidization region for the purpose of suppressing scattering of small powder, while moving the powder of various particle sizes with large span values inside the drying chamber 20, and in the partial fluidization region, the large powder may stay in the lower portion of the drying chamber and be discharged. At this time, if a partition is installed inside the drying chamber, a problem may occur in which large powder cannot be discharged and accumulated near the inlet. Therefore, in the present invention, the drying process is performed without dividing the drying chamber.

In addition, the present invention provides a fluidized bed dryer for performing the drying method of wet powder as described above.

The fluidized bed dryer according to an embodiment of the present invention may include a gas distribution plate having a plurality of holes, an upper drying chamber and a lower gas chamber divided by the gas distribution plate, a heat transfer plate provided inside the upper drying chamber, a wet powder inlet provided on one side of the upper drying chamber and dry powder outlet provided on the other side of the upper drying chamber, and a gas/flying powder discharge pipe provided on top of the upper drying chamber, and the lower gas chamber includes two or more divided compartments, two or more external blowers may be respectively connected to the two or more compartments to supply fluidizing gas at different flow velocities.

The lower gas chamber includes a first compartment corresponding to a region adjacent to the inlet of the upper drying chamber and a remaining second compartment, and an area of the first compartment may account for 20 to 50% of the total area of the lower gas chamber.

In addition, the second compartment may be further divided to include a third compartment.

In the fluidized bed dryer, the description of the same components as those of the previous drying method is the same.

[Mode for invention]

Hereinafter, the present invention will be described in more detail through examples. However, the following examples are intended to illustrate the present invention, and it is obvious to those skilled in the art that various changes and modifications may be made within the scope and spirit of the present invention, and the scope of the present invention is not limited thereto.

Example 1:

As shown in FIG. 2, in the fluidized bed dryer including the gas distribution plate 10 having a plurality of holes, the upper drying chamber 20 and the lower gas chamber 30 divided by the gas distribution plate, the heat transfer plate 40 provided inside the upper drying chamber 20, the wet powder inlet 50 provided on one side of the upper drying chamber and the dry powder outlet 60 provided on the other side of the upper drying chamber, and the gas/flying powder discharge pipe 70 provided on top of the upper drying chamber, the lower gas chamber 30 was divided into two compartments of the first compartment 30-1 and the second compartment 30-2. The area of the first compartment was set to 30% of the total area of the lower gas chamber 30.

Acrylonitrile butadiene styrene (ABS) powder (water content: 22 wt%) having various particle sizes as wet powder was supplied through the inlet 50 of the upper drying chamber 20.

Next, 85 °C hot air as a fluidizing gas was supplied to the first compartment 30-1 of the lower gas chamber using the external blower B-1 at a flow velocity of 7.6 times the minimum fluidization speed ($U_{mf}$) and 55 °C hot air as a fluidizing gas was supplied to the second compartment 30-2 of the lower gas chamber using the external blower B-2 at a flow velocity of 5.7 times the minimum fluidization speed ($U_{mf}$) to perform powder drying.

Example 2:

As shown in FIG. 4, in the fluidized bed dryer including the gas distribution plate 10 having a plurality of holes, the upper drying chamber 20 and the lower gas chamber 30 divided by the gas distribution plate, the heat transfer plate 40 provided inside the upper drying chamber 20, the wet powder inlet 50 provided on one side of the upper drying chamber and the dry powder outlet 60 provided on the other side of the upper drying chamber, and the gas/flying powder discharge pipe 70 provided on top of the upper drying chamber, the lower gas chamber 30 was divided into three compartments of the first compartment 30-1, the second compartment 30-2, and the third compartment 30-3. The area ratio of the first compartment, the second compartment, and the third compartment was set to 25:45:30.

Acrylonitrile butadiene styrene (ABS) powder (water content: 25 wt%) having various particle sizes as wet powder was supplied through the inlet 50 of the upper drying chamber 20.

Next, 85 °C hot air as a fluidizing gas was supplied to the first compartment 30-1 of the lower gas chamber using the external blower B-1 at a flow velocity of 8 times the minimum fluidization speed ($U_{mf}$), 70 °C hot air as a fluidizing gas was supplied to the second compartment 30-2 of the lower gas chamber using the external blower B-2 at a flow velocity of 6.8 times the minimum fluidization speed ($U_{mf}$), and 55 °C hot air as a fluidizing gas was supplied to the third compartment 30-3 of the lower gas chamber using the external blower B-3 at a flow velocity of 5.7 times the minimum fluidization speed ($U_{mf}$) to perform powder drying.

Comparative Example 1:

As shown in FIG. 1, the fluidized bed dryer including the gas distribution plate 10 having a plurality of holes, the upper drying chamber 20 and the lower gas chamber 30 divided by the gas distribution plate, the heat transfer plate 40 provided inside the upper drying chamber 20, the wet powder inlet 50 provided on one side of the upper drying chamber and the dry powder outlet 60 provided on the other side of the upper drying chamber, and the gas/flying powder discharge pipe 70 provided on top of the upper drying chamber was prepared.

After supplying acrylonitrile butadiene styrene (ABS) powder (water content 20 w%) having various particle sizes as wet powder through the inlet 50 of the upper drying chamber 20, 88 °C hot air was equally supplied as a fluidizing gas to the lower gas chamber 30 at a flow velocity of 6.3 times the minimum fluidization speed ($U_{mf}$) using the external blower B to perform powder drying.

The particle size distribution of the dried powder in the above Examples and Comparative Examples was measured using a particle size analyzer, and the span values defined by Equation 1 below were calculated from the results and shown in Table 1 below.

$$[Equation\ 1]$$

$$Span\ =\ (D_{90}-D_{10})/D_{50}$$

wherein $D_{10}$, $D_{50}$, and $D_{90}$ are sizes corresponding to 10%, 50%, and 90% of a cumulative volume in a particle size distribution of dry powder, respectively.

[Table 1]

| Dry conditions | Embodiment 1 | Embodiment 2 | Comparative Example 1 |
|---|---|---|---|
| Whether lower gas chamber is divided | ○ (First/second compartments) | ○ (First/second/third compartments) | X |
| Flow velocity of fluidizing gas in contact with wet powder in region near inlet of drying chamber | 7.6 times | 8 times | 6.3 times |
| (Reference: minimum fluidization speed, $U_{mf}$) | | | |
| Span value of dry powder | 2.6 | 3.0 | 2.4 |

From Table 1, in Examples 1 and 2, as the flow velocity of the fluidizing gas in the first compartment 30-1 corresponding to a region of the lower gas chamber 30 adjacent to the inlet of the upper drying chamber 20 was relatively increased, the drying speed of the first compartment 30-1 was increased, and as a result, the amount of scattered powder was minimized, thereby increasing the productivity of the dryer. That is, it can be confirmed that Examples 1 and 2 may perform an efficient drying process for powder of various particle sizes compared to Comparative Example 1.

[Detailed Description of Main Elements]

10: gas distribution plate having a plurality of holes
20: upper drying chamber
30: lower gas chamber
30-1, 30-2, 30-3: divided compartment of lower gas chamber
40: heat transfer plate
50: wet powder inlet
60: dry powder outlet
70: gas/flying powder discharge pipe
B, B-1, B-2, B-3: external blower
D: damper
H: external hot water circulator

**Claims**

**1.**  1. A method of drying wet powder using a fluidized bed dryer, the method comprising:

(S1) dividing a lower gas chamber into two or more compartments in the fluidized bed dryer including a gas distribution plate having a plurality of holes and an upper drying chamber and the lower gas chamber divided by the gas distribution plate;

(S2) raising an internal temperature of the upper drying chamber and then supplying wet powder through an inlet provided on one side of the upper drying chamber; and

(S3) supplying a fluidizing gas at different flow velocities to the two or more compartments, respectively, of the lower gas chamber using an external blower and introducing the fluidizing gas at different flow velocities into a corresponding region of the upper drying chamber through the gas distribution plate to perform drying of the wet powder.

2. The method of claim 1, wherein in the operation (S3), there are two or more external blowers, and the two or more external blowers supply the fluidizing gas at different flow velocities to two or more compartments, respectively, of the lower gas chamber.

3. The method of claim 1, wherein in the operation (S3), two or more dampers are provided between the external blower and the lower gas chamber, and a flow rate of the fluidizing gas supplied from the external blower is distributed and adjusted using the two or more dampers to supply the fluidizing gas at different flow velocities to two or more compartments, respectively, of the lower gas chamber.

4. The method of claim 1, wherein the lower gas chamber includes a first compartment corresponding to a region adjacent to the inlet of the upper drying chamber and a remaining second compartment, and an area of the first compartment accounts for 20 to 50% of a total area of the lower gas chamber.

5. The method of claim 4, wherein the flow velocity of the fluidizing gas supplied to the first compartment is 1.2 to 1.6 times the flow velocity of the fluidizing gas supplied to the second compartment.

6. The method of claim 4, wherein the flow velocity of the fluidizing gas supplied to the first compartment is in the range of 0.3 to 0.7 m/s.

7. The method of claim 1, wherein the internal temperature of the upper drying chamber is raised by circulating hot water by a heat transfer plate.

8. The method of claim 1, wherein a temperature of the fluidizing gas supplied to the first compartment is adjusted to be higher than a temperature of the fluidizing gas supplied to the second compartment in the range of 10 to 50 °C.

9. The method of claim 1, wherein a temperature of the fluidizing gas supplied to the second compartment is adjusted to be the same as the internal temperature of the upper drying chamber.

10. The method of claim 1, wherein the second compartment is further divided to include a third compartment.

11. The method of claim 1, wherein the upper drying chamber discharges dry powder having a water content of 1% or less based on the total weight thereof.

12. The method of claim 1, wherein the upper drying chamber discharges dry powder having a particle size distribution with a span range of 0.5 to 4, as defined by Equation 1 below:

$$[\text{Equation 1}]$$

$$\text{Span} = (D_{90} - D_{10})/D_{50}$$

wherein $D_{10}$, $D_{50}$, and $D_{90}$ are sizes corresponding to 10%, 50%, and 90% of a cumulative volume in a particle size distribution of dry powder, respectively.

13. A fluidized bed dryer for performing a drying method of wet powder according to claim 1, the fluidized bed dryer comprising:

a gas distribution plate having a plurality of holes, an upper drying chamber and a lower gas chamber divided by the gas distribution plate, a heat transfer plate provided inside the upper drying chamber, a wet powder inlet provided on one side of the upper drying chamber and dry powder outlet provided on the other side of the upper drying chamber, and a gas and flying powder discharge pipe provided on top of the upper drying chamber,

wherein the lower gas chamber includes two or more divided compartments, and two or more external blowers are respectively connected to the two or more compartments to supply fluidizing gas at different flow velocities.

14. The fluidized bed dryer of claim 13, wherein the lower gas chamber includes a first compartment corresponding to a region adjacent to the inlet of the upper drying chamber and a remaining second compartment, and an area of the first compartment accounts for 20 to 50% of a total area of the lower gas chamber.

15. The fluidized bed dryer of claim 14, wherein the second compartment is further divided to include a third compartment.

【FIG. 1】

【FIG. 2】

【FIG. 3】

【FIG. 4】

【FIG. 5】

【FIG. 6】

(a)

(b)

## INTERNATIONAL SEARCH REPORT

| | International application No. |
|---|---|
| | **PCT/KR2023/013707** |

### A. CLASSIFICATION OF SUBJECT MATTER

**F26B 3/08**(2006.01)i; **F26B 3/10**(2006.01)i; **F26B 17/10**(2006.01)i; **F26B 17/14**(2006.01)i

According to International Patent Classification (IPC) or to both national classification and IPC

### B. FIELDS SEARCHED

Minimum documentation searched (classification system followed by classification symbols)

F26B 3/08(2006.01); B07B 7/12(2006.01); B07B 9/00(2006.01); C10L 9/08(2006.01); F23G 5/04(2006.01); F23G 5/30(2006.01); F26B 21/02(2006.01); F26B 21/12(2006.01); F26B 21/14(2006.01); F26B 3/084(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 건조기(dryer), 유동층(fluid bed), 분산판(distribution plate), 구획(partition), 송풍기(blower), 기체(gas), 유속(flow rate)

### C. DOCUMENTS CONSIDERED TO BE RELEVANT

| Category* | Citation of document, with indication, where appropriate, of the relevant passages | Relevant to claim No. |
|---|---|---|
| X | KR 10-2016-0130522 A (SCHWING BIOSET) 11 November 2016 (2016-11-11)<br>See paragraphs [0015], [0020]-[0021], [0027]-[0028] and [0030]-[0031] and figure 2. | 1-15 |
| A | JP 6160825 B2 (IHI CORP.) 12 July 2017 (2017-07-12)<br>See paragraphs [0021]-[0029] and figures 1-2. | 1-15 |
| A | JP 6304482 B2 (IHI CORP.) 04 April 2018 (2018-04-04)<br>See paragraphs [0019]-[0029] and figure 1. | 1-15 |
| A | WO 2007-006218 A1 (INSTITUTE OF ENGINEERING THERMOPHYSICS, CHINESE ACADEMY OF SCIENCES) 18 January 2007 (2007-01-18)<br>See page 3, line 29 - page 5, line 22 and figures 1-4. | 1-15 |
| A | US 2020-0238337 A1 (CHINA UNIVERSITY OF MINING AND TECHNOLOGY) 30 July 2020 (2020-07-30)<br>See paragraphs [0021]-[0028] and figure 1. | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 November 2023** | **30 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/013707**

| Patent document cited in search report | | | Publication date (day/month/year) | Patent family member(s) | | | Publication date (day/month/year) |
|---|---|---|---|---|---|---|---|
| KR | 10-2016-0130522 | A | 11 November 2016 | AU | 2009-282426 | A1 | 18 February 2010 |
| | | | | AU | 2009-282426 | B2 | 07 May 2015 |
| | | | | CN | 102177406 | A | 07 September 2011 |
| | | | | CN | 102177406 | B | 06 November 2013 |
| | | | | KR | 10-1701693 | B1 | 13 February 2017 |
| | | | | KR | 10-2011-0051248 | A | 17 May 2011 |
| | | | | US | 2011-0173836 | A1 | 21 July 2011 |
| | | | | US | 9506691 | B2 | 29 November 2016 |
| | | | | WO | 2010-019246 | A2 | 18 February 2010 |
| | | | | WO | 2010-019246 | A3 | 20 May 2010 |
| JP | 6160825 | B2 | 12 July 2017 | JP | 2015-059710 | A | 30 March 2015 |
| JP | 6304482 | B2 | 04 April 2018 | JP | 2015-137306 | A | 30 July 2015 |
| WO | 2007-006218 | A1 | 18 January 2007 | CN | 100396994 | C | 25 June 2008 |
| | | | | CN | 100447102 | C | 31 December 2008 |
| | | | | CN | 1891643 | A | 10 January 2007 |
| | | | | CN | 1931752 | A | 21 March 2007 |
| | | | | JP | 2009-500155 | A | 08 January 2009 |
| | | | | JP | 4839371 | B2 | 21 December 2011 |
| US | 2020-0238337 | A1 | 30 July 2020 | AU | 2017-317608 | A1 | 09 August 2018 |
| | | | | AU | 2017-317608 | B2 | 07 February 2019 |
| | | | | CA | 2996396 | A1 | 21 July 2018 |
| | | | | CA | 2996396 | C | 10 September 2019 |
| | | | | CN | 106862077 | A | 20 June 2017 |
| | | | | CN | 106862077 | B | 19 October 2018 |
| | | | | JP | 2019-508652 | A | 28 March 2019 |
| | | | | JP | 6603409 | B2 | 06 November 2019 |
| | | | | US | 10821477 | B2 | 03 November 2020 |
| | | | | WO | 2018-133220 | A1 | 26 July 2018 |

Form PCT/ISA/210 (patent family annex) (July 2022)

**EP 4 397 929 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220131796

- KR 1020230119543